# FASCICULE DE BREVET EUROPEEN

(11) **EP 0 656 456 B1**
(45) Date de publication et mention de la délivrance du brevet: **13.08.1997**
(21) Numéro de dépôt: 94402621.0
(22) Date de dépôt: 17.11.1994
(51) Int. Cl.: E05B 65/19, B62D 25/12

(54) **Dispositif de sécurité de fermeture pour un capot de véhicule ou autre élément pivotant**
Vorrichtung zum sicheren Schliessen einer Fahrzeughaube oder eines anderen drehbaren Elements
Security device for the closure of a vehicle bonnet or other pivoting member

(30) Priorité: 02.12.1993 FR 9314669
(43) Date de publication de la demande: 07.06.1995
(73) Titulaire: AUTOMOBILES PEUGEOT, 75116 Paris (FR); AUTOMOBILES CITROEN, 92200 Neuilly-sur-Seine (FR)
(72) Inventeur: Galland, Didier, F-78320 Levis Saint Nom (FR)
(74) Mandataire: Robert, Jean-François

(56) Documents cités:
- DE-A- 3 702 118
- FR-A- 2 512 765
- US-A- 2 286 739
- US-A- 4 197 612
- US-A- 4 458 379

## Description

Un capot de véhicule comporte un crochet de sécurité qui est monté pivotant par rapport au capot et peut venir agripper, sous l'action d'un ressort de rappel, un élément solidaire de la face avant du véhicule. A l'heure actuelle, l'axe de pivotement du crochet est monté dans une chape en tôle fixée au capot et bloqué en translation par une simple rondelle élastique. Lors du montage, l'opérateur doit disposer le crochet et le ressort dans la chape de façon à pouvoir enfiler l'axe; cette opération se fait en comprimant le ressort, ce qui engendre une contrainte sur le crochet et rend difficile la mise en place de ce dernier pour enfiler l'axe. D'autre part, lors de la mise en place de la rondelle élastique, il se peut qu'on déforme la chape et on engendre ainsi un frottement entre la chape et le crochet; ce frottement peut empêcher le crochet de pivoter, ce qui est inadmissible pour une pièce de sécurité.

La présente invention a pour objet un dispositif de sécurité de fermeture pour un élément pivotant, tel qu'un capot de véhicule, qui comporte un crochet, ayant une section en U, monté pivotant autour d'un axe par rapport à l'élément et coopérant avec une pièce d'accrochage sous l'action d'un élément élastique de rappel et est perfectionné de manière à remédier aux inconvénients qui viennent d'être signalés.

Ce dispositif de sécurité est caractérisé en ce que le crochet comporte des moyens pour maintenir l'élément élastique de rappel dans sa position de montage dans le crochet, avant mise en place de l'axe de pivotement.

On a décrit ci-après, à titre d'exemple non limitatif, un mode de réalisation du dispositif de sécurité selon l'invention avec référence aux dessins annexés dans lesquels :
La Figure 1 est une vue en coupe montrant un capot de véhicule accroché sur la face avant de ce dernier;
La Figure 2 est une vue latérale du crochet;
La Figure 3 en est une coupe suivant III-III de la Figure 2;
La Figure 4 est une vue latérale du ressort de rappel;
La Figure 5 est une vue du ressort suivant la flèche F de la Figure 4;
La Figure 6 est une vue en élévation de l'axe de pivotement du verrou;
La Figure 7 est une vue en coupe du dispositif de sécurité passant par le plan de la branche 7d;
La Figure 8 en est une coupe suivant VIII-VIII de la Figure 7.

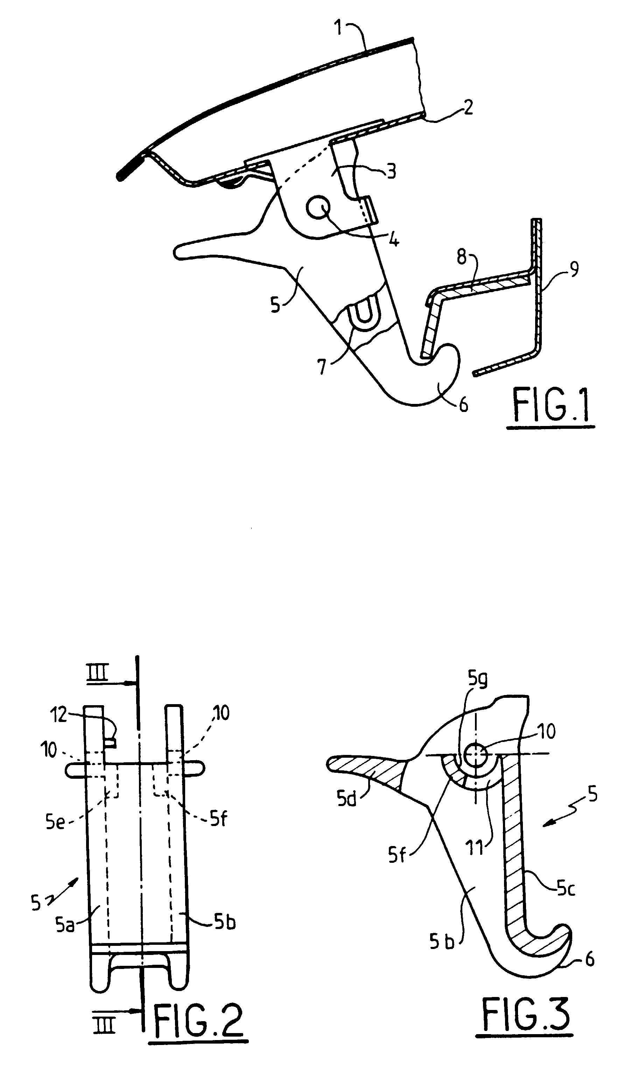

A la Figure 1, on voit un capot 1 de véhicule automobile présentant une doublure 2 sur laquelle est fixé un support 3 pour un axe 4. Sur cet axe est monté pivotant un crochet 5 dont le bec 6 peut venir accrocher, sous l'action d'un ressort de rappel 7, un profilé 8 solidaire de la face avant 9 du véhicule.

Comme on le voit plus particulièrement aux Figures 2 et 3, le crochet 5 est en forme de U et présente deux ailes 5a et 5b reliées par un voile avant 5c et un voile arrière 5d formant bec de manoeuvre. Chacune des ailes 5a et 5b présente un trou 10 et, sur sa face interne, un bossage 5e ou 5f en portion de cylindre coaxial au trou 10 et délimitant des fraisages 5g.

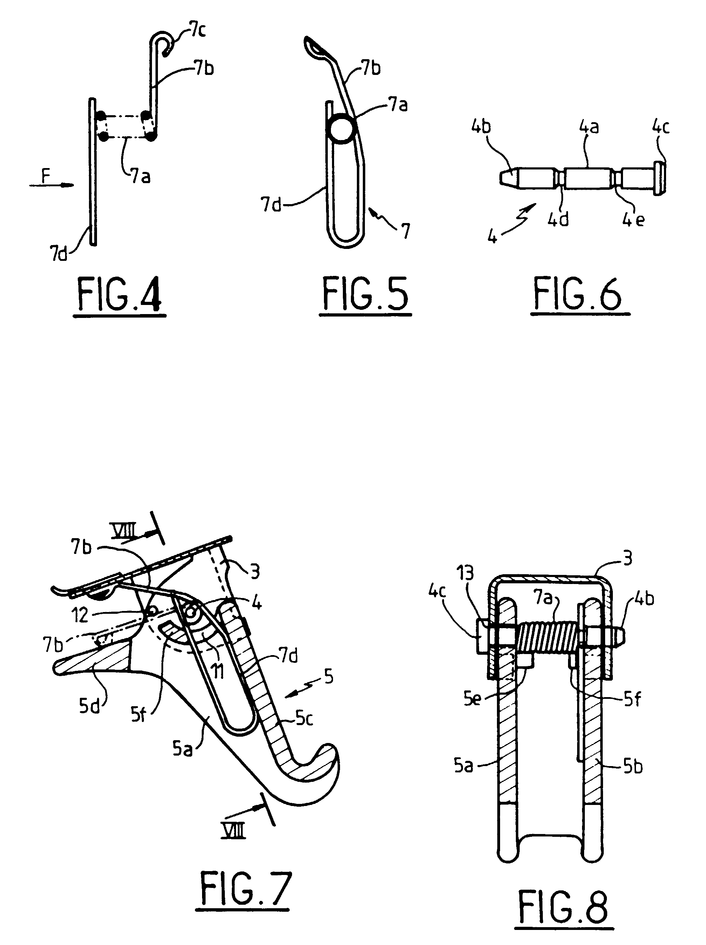

Le ressort 7 (Figures 4 et 5) est constitué par un fil d'acier qui comporte une partie centrale cylindrique à spires jointives 7a prolongée, à l'une de ses extrémités, par une branche rectiligne 7b terminée par un crochet 7c et, à son autre extrémité, par une partie 7d en forme d'épingle à cheveux. La branche 7b est perpendiculaire à l'axe de la partie 7a et la partie 7d est située dans un plan perpendiculaire à cet axe.

L'axe 4 comprend une partie cylindrique 4a terminée à l'une de ses extrémités par un tronc de cône 4b et à son extrémité opposée par un épaulement 4c. Cette partie cylindrique 4a présente deux gorges 4d et 4e (Figure 6).

Le ressort 7 est initialement placé dans le crochet 5, comme le montre la Figure 7, sa branche en épingle à cheveux 7d traverse un perçage 11 prévu dans le bossage 5f et est en appui sur le voile avant 5c du crochet alors que sa branche rectiligne 7b est provisoirement en appui sur un pion 12 prévu sur la face interne de l'aile 5a du crochet comme indiqué en traits mixtes à la Figure 7. L'opérateur engage alors l'axe 4 dans les trous 10 des ailes 5a et 5b du crochet et dans des trous 13 prévus dans le support 3. Le ressort s'engage dans la gorge 4d ou 4e suivant le sens de montage de l'axe, ce qui verrouille cet axe en position. Il ne reste plus à l'opérateur qu'à dégager du pion 12 la branche 7b du ressort qui vient prendre appui sur la doublure 2 du capot, le ressort jouant alors son rôle de rappel du crochet.

Il va de soi que la présente invention ne doit pas être considérée comme limitée au mode de réalisation décrit et représenté, mais en couvre au contraire toutes les variantes.

## Revendications

1. Dispositif de sécurité de fermeture pour un élément pivotant (1), tel qu'un capot de véhicule, qui comporte un crochet (5), ayant une section en U, monté pivotant autour d'un axe (4) par rapport à l'élément (1) et coopérant avec une pièce d'accrochage (8) sous l'action d'un élément élastique de rappel (7),
caractérisé en ce que le crochet (5) comporte des moyens pour maintenir l'élément élastique de rappel (7) dans sa position de montage dans le crochet, avant mise en place de l'axe de pivotement (4).

2. Dispositif de sécurité selon la revendication 1, caractérisé en ce que l'élément élastique de rappel (7) est constitué par un fil élastique formant ressort et comprenant une partie centrale cylindrique (7a) à spires jointives destinée à être traversée par l'axe (4) et prolongée, à l'une de ses extrémités, par une partie rectiligne (7b) perpendiculaire à l'axe de la partie (7a) et, à son autre extrémité, par une partie (7d) en forme d'épingle à cheveux située dans un plan perpendiculaire audit axe de la partie (7a).

3. Dispositif de sécurité selon la revendication 2, caractérisé en ce que les moyens pour maintenir l'élément élastique de rappel (7) dans le crochet (5) comprennent des moyens d'indexage (5e-5f) du ressort, une butée (12) pour la partie rectiligne (7b) du ressort, et des fraisages (5g) servant de logement à la partie cylindrique (7a) du ressort.

4. Dispositif de sécurité selon la revendication 3, caractérisé en ce que les moyens d'indexage du ressort (7) sont constitués par deux bossages (5e et 5f) prévus sur la face interne des ailes (5a et 5b) du crochet (5).

5. Dispositif de sécurité selon la revendication 3 ou 4,
caractérisé en ce que la butée (12) est prévue sur la face interne de l'aile (5a) du crochet 5.

6. Dispositif de sécurité selon l'une des revendications 3 à 5,
caractérisé en ce que les fraisages (5g) sont réalisés dans deux bossages (5e et 5f) prévus sur la face interne des ailes (5a et 5b).

7. Dispositif de sécurité selon l'une des revendications 3 à 6,
caractérisé en ce que l'axe (4) comporte une gorge (4d ou 4e) dans laquelle peut s'engager la branche (7d) en épingle à cheveux du ressort (7), ce qui immobilise l'axe en translation.

8. Dispositif de sécurité selon la revendication 7, caractérisé en ce que l'axe (4) est de forme générale cylindrique et présente, à l'une de ses extrémités, une partie tronconique (4b) et, à son autre extrémité, un épaulement (4c), deux gorges identiques (4d et 4e) étant prévues entre la partie (4b) et l'épaulement (4c).

9. Dispositif de sécurité selon la revendication 8, caractérisé en ce que les gorges (4d et 4e) sont disposées de manière que l'une d'entre elles se trouve en regard de la branche (7d) en épingle à cheveux du ressort (7), quel que soit le côté d'introduction de l'axe (4) dans le crochet (5).

## Patentansprüche

1. Sicherheitsschließvorrichtung für ein schwenkbares Element (1), wie eine Fahrzeughaube, mit einem Haken (5), der einen U-förmigen Querschnitt hat und um eine Achse (4) in Bezug auf das Element (1) drehbar montiert ist, und unter Einwirkung eines elastischen Rückholelementes (7) mit einem Einhakstück (8) zusammenwirkt,
dadurch gekennzeichnet, daß der Haken (5) Einrichtungen aufweist, um das elastische Rückholelement (7) vor Einbau der Drehachse (4) in seiner Montageposition im Haken zu halten.

2. Sicherheitsvorrichtung nach Anspruch 1, dadurch gekennzeichnet, daß das elastische Rückholelement (7) von einer elastischen Faser bzw. Draht gebildet wird, der eine Feder bildet und einen zylindrischen Mittelabschnitt (7a) mit nebeneinanderliegenden Windungen aufweist, der dazu bestimmt ist, von der Achse (4) durchdrungen zu werden, und an einem seiner Enden durch einen geradlinigen, zur Achse des Abschnittes (7a) senkrechten Abschnitt (7b) und an seinem anderen Ende durch einen haarnadelförmigen, in einer zur Achse des Abschnittes (7a) senkrechten Ebene angeordneten Abschnitt (7b) verlängert zu werden.

3. Sicherheitsvorrichtung nach Anspruch 2, dadurch gekennzeichnet, daß die Einrichtungen zum Halten des elastischen Rückholelements (7) im Haken (5) Federausrichteinrichtungen (5e-5f), einen Anschlag (12) für den geradlinigen Abschnitt (7b) der Feder und Fräsungen (5g) aufweisen, die dem zylindrischen Abschnitt (7a) der Feder als Aufnahme dienen.

4. Sicherheitsvorrichtung nach Anspruch 3, dadurch gekennzeichnet, daß die Ausrichteinrichtungen der Feder (7) von zwei Höckern oder Vorsprüngen (5e und 5f) gebildet werden, die auf der Innenseite der Flügel (5a und 5b) des Hakens (5) vorgesehen sind.

5. Sicherheitsvorrichtung nach Anspruch 3 oder 4, dadurch gekennzeichnet, daß der Anschlag (12) auf der Innenseite des Flügels (5a) des Hakens (5) vorgesehen ist.

6. Sicherheitsvorrichtung nach einem der Ansprüche 3 bis 5, dadurch gekennzeichnet, daß die Fräsungen (5g) in zwei auf der Innenseite der Flügel (5a und 5b) vorgesehenen Vorsprüngen (5e und 5f) ausgeführt sind.

7. Sicherheitsvorrichtung nach einem der Ansprüche 3 bis 6, dadurch gekennzeichnet, daß die Achse (4) eine Kehle (4d oder 4e) aufweist, in die der Haarnadelarm (7d) der Feder (7) greifen kann, was die Achse bezüglich Verschiebung festlegt.

8. Sicherheitsvorrichtung nach Anspruch 7, dadurch gekennzeichnet, daß die Achse (4) von allgemein zylindrischer Form ist und an einem ihrer Enden einen kegelstumpfförmigen Abschnitt (4b), an ihrem anderen Ende einen Absatz (4c), und zwei identische Kehlen (4d und 4e) aufweist, die zwischen dem Abschnitt (4b) und dem Absatz (4c) vorgesehen sind.

9. Sicherheitsvorrichtung nach Anspruch 8, dadurch gekennzeichnet, daß die Kehlen (4d und 4e) derart angeordnet sind, daß eine von ihnen sich gegenüber dem Haarnadelarm (7d) der Feder (7) befindet, unabhängig von der Einführungsseite der Achse (4) in den Haken (5).

## Claims

1. Safety closure device for a pivoting member (1), such as a vehicle bonnet, which comprises a hook (5), having a U-shaped section, pivotally mounted about a pin (4) relative to the member (1) and co-operating with a hooking part (8) under the action of an elastic return member (7),
characterised in that the hook (5) comprises means for holding the elastic return member (7) in its mounted position in the hook, before the pivoting pin (4) is positioned.

2. Safety device according to Claim 1,
characterised in that the elastic return member (7) is constituted by an elastic wire forming a spring and comprising a cylindrical central portion (7a) with contiguous turns through which the pin (4) is intended to pass and extended, at one of its ends, by a rectilinear portion (7b) perpendicular to the axis of the portion (7a) and, at its other end, by a hairpin-shaped portion (7d) located in a plane perpendicular to said axis of the portion (7a).

3. Safety device according to Claim 2,
characterised in that the means for holding the elastic return member (7) inside the hook (5) comprise indexing means (5e-5f) for the spring, a stop (12) for the rectilinear portion (7b) of the spring, and milled areas (5g) serving as a housing for the cylindrical portion (7a) of the spring.

4. Safety device according to Claim 3,
characterised in that the indexing means for the spring (7) are constituted by two bosses (5e and 5f) provided on the inner face of the wings (5a and 5b) of the hook (5).

5. Safety device according to Claim 3 or 4,
characterised in that the stop (12) is provided on the inner face of the wing (5a) of the hook 5.

6. Safety device according to one of Claims 3 to 5,
characterised in that the milled areas (5g) are made in two bosses (5e and 5f) provided on the inner face of the wings (5a and 5b).

7. Safety device according to one of Claims 3 to 6,
characterised in that the pin (4) comprises a groove (4d or 4e) in which the hairpin branch (7d) of the spring (7) can be engaged, which immobilises the pin in translation.

8. Safety device according to Claim 7,
characterised in that the pin (4) is generally cylindrical in shape and has at one of its ends a portion (4b) shaped like a truncated cone and, at its other end, a shoulder (4c), two identical grooves (4d and 4e) being provided between the portion (4b) and the shoulder (4c).

9. Safety device according to Claim 8,
characterised in that the grooves (4d and 4e) are arranged so that one of them is facing the hairpin branch (7d) of the spring (7), whichever side the pin (4) is introduced into the hook (5).
